# FASCICULE DE BREVET EUROPEEN

(11) **EP 3 221 970 B1**
(45) Date de publication et mention de la délivrance du brevet: **19.06.2019**
(21) Numéro de dépôt: 15797959.2
(22) Date de dépôt: 16.11.2015
(51) Int. Cl.: H04B 1/18, H04B 1/04

(54) **DISPOSITIF DE COMMANDE PAR SIGNAUX RADIOFRÉQUENCES D'UN APPAREIL ÉLECTRIQUE DOMESTIQUE, APPAREIL ÉLECTRIQUE DOMESTIQUE ASSOCIÉ ET INSTALLATION DOMOTIQUE COMPRENANT UN TEL APPAREIL**
VORRICHTUNG ZUR STEUERUNG EINES ELEKTRISCHEN HAUSHALTSGERÄTS ÜBER HOCHFREQUENZSIGNALE, ZUGEHÖRIGES ELEKTRISCHES HAUSHALTSGERÄT UND HAUSTECHNIKANLAGE MIT SOLCH EINEM GERÄT
DEVICE FOR CONTROL BY RADIOFREQUENCY SIGNALS OF A DOMESTIC ELECTRICAL APPLIANCE, ASSOCIATED DOMESTIC ELECTRICAL APPLIANCE AND HOME AUTOMATION INSTALLATION COMPRISING SUCH AN APPLIANCE

(30) Priorité: 18.11.2014 FR 1461145
(43) Date de publication de la demande: 27.09.2017
(73) Titulaire: SOMFY ACTIVITES SA, 74300 Cluses (FR)
(72) Inventeur: RAMUS, Michel, 74800 Amancy (FR)
(74) Mandataire: Novaimo
(86) Numéro de dépôt international: PCT/EP2015/076696
(87) Numéro de publication internationale: WO 2016/079056

(56) Documents cités:
- FR-A1- 2 930 093
- US-A1- 2011 133 995

## Description

La présente invention concerne un dispositif de commande par signaux radiofréquences d'un appareil électrique domestique alimenté en énergie électrique par un réseau d'alimentation électrique.

La présente invention concerne également un appareil électrique domestique, en particulier un actionneur électromécanique pour une installation domotique de fermeture ou de protection solaire, et une installation domotique de fermeture ou de protection solaire comprenant un écran enroulable sur un tube d'enroulement entraîné en rotation par un tel actionneur électromécanique.

De manière générale, la présente invention concerne le domaine des dispositifs d'occultation comprenant un dispositif d'entraînement motorisé mettant en mouvement un écran entre au moins une première position et une deuxième position.

Un dispositif d'entraînement motorisé comprend un actionneur électromécanique d'un élément mobile de fermeture, d'occultation ou de protection solaire tel qu'un volet, une porte, une grille, un store, ou tout autre matériel équivalent, appelé par la suite écran.

On connaît déjà le document FR 2 930 093 A1 qui décrit un dispositif de commande par signaux radiofréquences d'un appareil électrique domestique alimenté en énergie électrique par un réseau d'alimentation électrique.

Le dispositif de commande par signaux radiofréquences comprend une unité radiofréquences d'émission et/ou de réception de signaux radiofréquences.

Le dispositif de commande par signaux radiofréquences comprend un premier conducteur électrique et un deuxième conducteur électrique d'alimentation en énergie électrique du dispositif de commande.

Le dispositif de commande par signaux radiofréquences comprend une antenne reliée électriquement à l'unité radiofréquences. Au moins l'un des deux conducteurs électriques du réseau d'alimentation électrique constitue une antenne réceptrice ou émettrice de longueur indéterminée pour les signaux radiofréquences.

Le dispositif de commande par signaux radiofréquences comprend un coupleur. L'unité radiofréquences comprend une sortie et/ou une entrée de signaux radiofréquences reliée électriquement à un point de connexion du coupleur.

Le dispositif de commande par signaux radiofréquences comprend une carte de circuit imprimé. La carte de circuit imprimé comprend le coupleur.

Le coupleur comprend au moins un bobinage.

La liaison électrique entre la sortie et/ou l'entrée de signaux radiofréquences de l'unité radiofréquences et le point de connexion du coupleur permet de relier électriquement la sortie et/ou l'entrée de signaux radiofréquences de l'unité radiofréquences à une borne additionnelle du bobinage située entre les deux bornes d'extrémité du bobinage.

Le bobinage est réalisé sous la forme de spires imprimées sur la carte de circuit imprimé.

Le coupleur est connecté à une première extrémité au premier conducteur électrique du dispositif de commande de signaux radiofréquences et à une deuxième extrémité à une tension de référence de l'unité radiofréquences.

Le coupleur est traversé entre ses première et deuxième extrémités par le courant du réseau d'alimentation électrique circulant dans l'un des conducteurs électriques du réseau d'alimentation électrique et alimentant l'appareil électrique domestique.

Cependant, ce dispositif de commande par signaux radiofréquences présente l'inconvénient de réaliser le coupleur au moyen d'un bobinage formé par des spires imprimées sur la carte de circuit imprimé du dispositif de commande par signaux radiofréquences.

Dans un cas où un fort courant alimente l'appareil électrique domestique, un tel bobinage formé par des spires imprimées engendre un encombrement important sur la carte de circuit imprimé à cause de la largeur des pistes de la carte de circuit imprimée réalisant le bobinage et le conducteur électrique relié électriquement au bobinage.

En effet, le dimensionnement de ces pistes de la carte de circuit imprimé est lié à la valeur du courant d'alimentation de l'appareil électrique domestique traversant le coupleur constitué du bobinage formé par des spires imprimées.

Par conséquent, l'emplacement occupé par le bobinage sur la carte de circuit imprimé augmente le coût d'obtention de la carte de circuit imprimé du dispositif de commande par signaux radiofréquences et nécessite un logement dans l'appareil électrique domestique de taille importante pour l'assemblage de la carte de circuit imprimé.

Dans un cas où la fréquence de travail du dispositif de commande par signaux radiofréquences est élevée, par exemple de l'ordre de 2,4GHz, un tel bobinage formé par des spires imprimées est de petite dimension.

Par conséquent, la réalisation de la carte de circuit imprimé avec un tel bobinage formé par des spires imprimées est complexe à industrialiser, engendre des difficultés pour garantir la fiabilité du dispositif de commande par signaux radiofréquences, lors d'une production en série, et augmente le coût d'obtention de la carte de circuit imprimé du dispositif de commande par signaux radiofréquences.

La présente invention a pour but de résoudre les inconvénients précités et de proposer un dispositif de commande par signaux radiofréquences d'un appareil électrique domestique permettant d'implanter un coupleur relié électriquement à l'un des conducteurs électriques du réseau d'alimentation électrique sur une carte de circuit imprimé du dispositif de commande, tout en s'affranchissant des problématiques liées à la valeur de courant du réseau d'alimentation électrique circulant dans le coupleur et/ou à la valeur de la fréquence de travail de l'unité radiofréquences.

Pour tendre vers ce but, la présente invention propose d'utiliser une ligne de transmission imprimée à la place de la bobine proposée dans l'art antérieur.

L'invention est définie par les revendications.

A cet égard, la présente invention vise, selon un premier aspect, un dispositif de commande par signaux radiofréquences d'un appareil électrique domestique alimenté en énergie électrique par un réseau d'alimentation électrique, le dispositif comprenant :
- un premier conducteur électrique et un deuxième conducteur électrique d'alimentation en énergie électrique du dispositif de commande,
- un coupleur,
- une unité radiofréquences d'émission et/ou de réception de signaux radiofréquences comprenant une sortie et/ou une entrée de signaux radiofréquences reliée électriquement à un point de connexion du coupleur, de telle sorte que le coupleur adapte l'impédance de sortie et/ou d'entrée de l'unité radiofréquences,
- une carte de circuit imprimé comprenant le coupleur.

Selon l'invention, le coupleur est formé par une ligne de transmission imprimée sur la carte de circuit imprimé, une première extrémité de la ligne de transmission imprimée étant reliée électriquement au premier conducteur électrique du dispositif de commande, et une deuxième extrémité de la ligne de transmission imprimée étant reliée électriquement à une première tension de référence. Et le point de connexion du coupleur constitué par la ligne de transmission imprimée est disposé entre les première et deuxième extrémités de la ligne de transmission imprimée. Et, le dispositif de commande par signaux radiofréquences comprend une antenne reliée électriquement à l'unité radiofréquences par l'intermédiaire d'au moins l'un des conducteurs électriques du réseau d'alimentation électrique, le premier conducteur électrique du dispositif de commande étant relié au réseau d'alimentation électrique, et le coupleur adaptant l'impédance de sortie et/ou d'entrée de l'unité radiofréquences à l'impédance de l'antenne.

Ainsi, l'implantation du coupleur sur la carte de circuit imprimé du dispositif de commande par signaux radiofréquences au moyen d'une ligne de transmission imprimée et la liaison électrique de la ligne de transmission imprimée à l'un des conducteurs électriques du réseau d'alimentation électrique permet de s'affranchir des problématiques liées à la valeur de courant du réseau d'alimentation électrique circulant dans le coupleur et/ou liées à la valeur de la fréquence de travail de l'unité radiofréquences.

La ligne de transmission imprimée présente une longueur d'onde du même ordre de grandeur que la longueur d'onde de la fréquence du signal à transmettre ou à recevoir par l'unité radiofréquences. La ligne de transmission est caractérisée par son impédance caractéristique, pouvant être par exemple de 50 Ohms.

La ligne de transmission imprimée est formée par une piste électriquement conductrice, afin d'obtenir l'impédance caractéristique souhaitée, et acheminant un signal électrique depuis une source vers une charge, en l'occurrence entre l'un des conducteurs électriques du réseau d'alimentation électrique et l'unité radiofréquences, et inversement, c'est-à-dire que le signal est acheminé soit depuis l'un des conducteurs électriques du réseau d'alimentation électrique vers l'unité radiofréquences, soit depuis l'unité radiofréquences vers l'un des conducteurs électriques du réseau d'alimentation électrique.

En outre, la mise en oeuvre du coupleur avec une prise intermédiaire réalisée par le point de connexion de la ligne de transmission imprimée relié électriquement à la sortie et/ou l'entrée de signaux radiofréquences de l'unité radiofréquences permet d'obtenir une valeur d'impédance caractéristique, de sorte à être en adéquation avec la valeur d'impédance de l'unité radiofréquences.

De cette manière, la largeur de la piste de la carte de circuit imprimé formant la ligne de transmission imprimée peut être adaptée en fonction de la valeur de courant du réseau d'alimentation électrique circulant dans le coupleur sans engendrer une perte de place sur la carte de circuit imprimé du dispositif de commande par signaux radiofréquences.

Par ailleurs, la mise en oeuvre du coupleur au moyen d'une ligne de transmission imprimée permet de réaliser une piste de faible encombrement sur la carte de circuit imprimé du dispositif de commande par signaux radiofréquences, lorsque la fréquence de travail de l'unité radiofréquences est élevée.

Plus la fréquence de travail de l'unité radiofréquences est élevée, plus la longueur d'onde est petite. Par conséquent, la longueur du coupleur diminue.

De cette manière, la réalisation du coupleur au moyen d'une ligne de transmission imprimée est plus aisée.

Préférentiellement, la ligne de transmission imprimée formant le coupleur est une ligne quart d'onde imprimée sur la carte de circuit imprimé.

Selon une caractéristique préférée de l'invention, la ligne de transmission imprimée s'étend, au moins partiellement, suivant une direction parallèle au premier conducteur électrique du dispositif de commande.

En pratique, dans une configuration de fonctionnement du dispositif de commande, la ligne de transmission imprimée est traversée par le courant du réseau d'alimentation électrique circulant dans l'un des conducteurs électriques du réseau d'alimentation électrique puis dans le premier conducteur électrique du dispositif de commande et alimentant l'appareil électrique domestique.

Selon une autre caractéristique préférée de l'invention, le dispositif de commande comprend une autre ligne de transmission imprimée sur la carte de circuit imprimé, une première extrémité de l'autre ligne de transmission imprimée étant reliée électriquement au deuxième conducteur électrique du dispositif de commande, et une deuxième extrémité de l'autre ligne de transmission imprimée étant reliée électriquement à une deuxième tension de référence.

Avantageusement, le dispositif de commande comporte un condensateur reliant électriquement la deuxième extrémité de l'autre ligne de transmission imprimée à la deuxième tension de référence.

Préférentiellement, l'autre ligne de transmission imprimée s'étend, au moins partiellement, suivant une direction parallèle au deuxième conducteur électrique du dispositif de commande.

La présente invention vise, selon un deuxième aspect, un appareil électrique domestique comprenant un dispositif de commande par signaux radiofréquences selon l'invention.

Cet appareil électrique domestique présente des caractéristiques et avantages analogues à ceux décrits précédemment en relation avec le dispositif de commande par signaux radiofréquences selon l'invention.

Préférentiellement, l'appareil électrique domestique est un actionneur électromécanique pour une installation domotique de fermeture ou de protection solaire.

La présente invention vise, selon un troisième aspect, une installation domotique de fermeture ou de protection solaire comprenant un appareil électrique domestique formant un actionneur électromécanique pour une installation domotique de fermeture ou de protection solaire et un écran enroulable sur un tube d'enroulement entraîné en rotation par l'actionneur électromécanique.

D'autres particularités et avantages de l'invention apparaîtront encore dans la description ci-après.

Aux dessins annexés, donnés à titre d'exemples non limitatifs :
- la figure 1 est une vue schématique en coupe d'une installation domotique conforme à un mode de réalisation de l'invention ;
- la figure 2 est une vue schématique en perspective de l'installation domotique illustrée à la figure 1 ;
- la figure 3 est une coupe schématique partielle de l'installation domotique illustrée à la figure 2 comprenant un actionneur électromécanique conforme à un mode de réalisation de l'invention ; et
- la figure 4 est un schéma électrique simplifié d'un dispositif de commande par signaux radiofréquences conforme à un mode de réalisation d'un appareil électrique domestique appartenant à l'installation domotique illustrée aux figures 1 à 3.

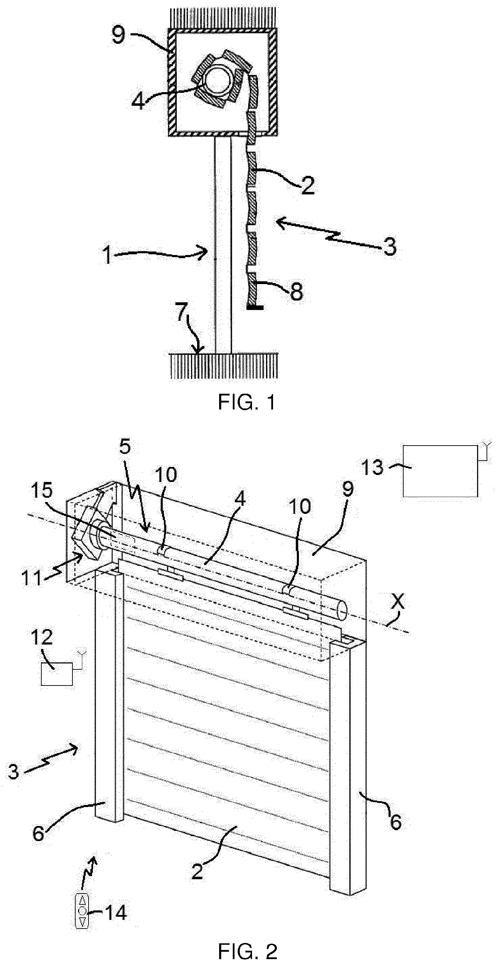

On va décrire tout d'abord, en référence aux figures 1 et 2, une installation domotique conforme à un mode particulier de réalisation de l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, ou encore un portail roulant. Bien entendu, la présente invention s'applique à tous les types de dispositif d'occultation.

On va décrire, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse.

L'écran 2 mobile du dispositif d'occultation 3 est préférentiellement un écran de fermeture, d'occultation et/ou de protection solaire, s'enroulant sur le tube d'enroulement 4 dont le diamètre intérieur est sensiblement équivalent au diamètre ou aux dimensions externes d'un actionneur électromécanique 11, de sorte que l'actionneur électromécanique 11 puisse être inséré dans le tube d'enroulement 4 lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à dérouler ou enrouler l'écran 2 du dispositif d'occultation 3.

Le dispositif d'occultation 3 comprend le tube d'enroulement 4 pour enrouler l'écran 2, où, dans l'état monté, l'actionneur électromécanique 11 est inséré dans le tube d'enroulement 4.

De manière connue, un volet roulant 3 comporte un tablier comprenant des lames horizontales articulées les unes aux autres, formant l'écran 2 du volet roulant 3, et guidées par deux glissières latérales 6. Ces lames sont jointives lorsque l'écran 2 atteint sa position basse déroulée.

Dans le cas d'un volet roulant, la position haute enroulée correspond à la mise en appui d'une lame d'extrémité finale 8 en forme de L du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1, illustré à la figure 1.

La première lame du volet roulant 3, opposée à la lame d'extrémité, est reliée au tube d'enroulement 4 au moyen d'au moins une articulation 10.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

L'unité de commande centrale 13 peut être en communication avec une station météorologique déportée à l'extérieur du bâtiment, incluant, notamment, un ou plusieurs capteurs pouvant être configurés pour déterminer, par exemple, une température, une luminosité, ou encore une vitesse de vent.

Une télécommande 14, pouvant être un type d'unité de commande locale, et pourvue d'un clavier de commande, qui comprend des moyens de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif d'occultation 3, pouvant être émises, notamment, par la télécommande 14.

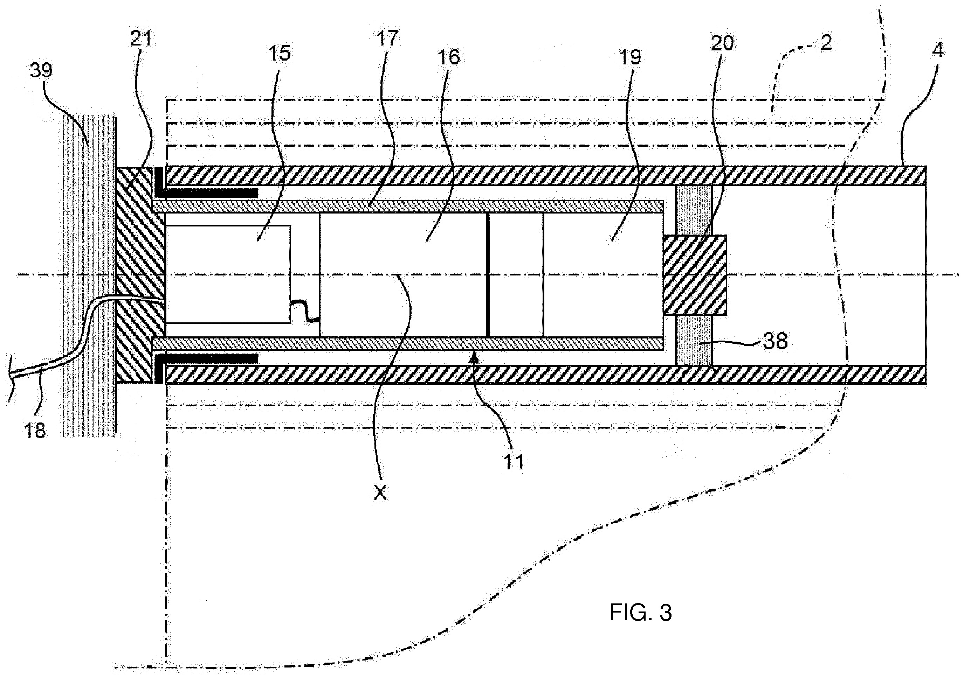

L'actionneur électromécanique 11 comprend un moteur électrique 16, illustré à la figure 3. Le moteur électrique 16 comprend un rotor et un stator positionnés de manière coaxiale autour d'un axe de rotation X.

Des moyens de commande de l'actionneur électromécanique 11 conforme à l'invention, permettant le déplacement de l'écran 2 du dispositif d'occultation 3, sont constitués par au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de réception d'ordres, en particulier d'ordres radioélectriques émis par un émetteur d'ordres, tel que la télécommande 14 destinée à commander l'actionneur électromécanique 11.

Le module de réception d'ordres peut également permettre la réception d'ordres transmis par des moyens filaires.

Ici, et tel qu'illustré à la figure 3, l'unité électronique de contrôle 15 est disposée à l'intérieur d'un carter 17 de l'actionneur électromécanique 11.

Les moyens de commande de l'actionneur électromécanique 11 comprennent des moyens matériels et/ou logiciels, notamment configurés de sorte à permettre le pilotage adapté du moteur électrique 16.

A titre d'exemple nullement limitatif, les moyens matériels peuvent comprendre au moins un microcontrôleur.

On va décrire à présent, plus en détail et en référence à la figure 3, l'actionneur électromécanique 11 appartenant à l'installation domotique des figures 1 et 2.

L'actionneur électromécanique 11 est alimenté en énergie électrique par un réseau d'alimentation électrique du secteur, en particulier par le réseau alternatif commercial.

La tension du réseau d'alimentation électrique ou tension secteur présente, par exemple, une valeur de 230 VRMS (valeur de crête de 325V) pour le réseau électrique français, et une fréquence de 50 Hz. Bien entendu, la tension secteur peut présenter des valeurs différentes, en fonction du réseau électrique du pays dans lequel on se situe.

L'actionneur électromécanique 11 permet de déplacer l'écran 2 du dispositif d'occultation 3.

Ici, l'actionneur électromécanique 11 comprend un câble d'alimentation électrique 18 permettant son alimentation en énergie électrique depuis le réseau d'alimentation électrique du secteur.

Le carter 17 de l'actionneur électromécanique 11 est, préférentiellement, de forme cylindrique.

Dans un mode de réalisation, le carter 17 est réalisé dans un matériau métallique.

Bien entendu, la matière du carter de l'actionneur électromécanique n'est nullement limitative et peut être différente, et en particulier peut être en matière plastique.

L'actionneur électromécanique 11 comprend également un dispositif de réduction à engrenages 19 et un arbre de sortie 20.

L'actionneur électromécanique 11 peut également comprendre un dispositif de détection de fin de course et/ou d'obstacle, pouvant être mécanique ou électronique.

Avantageusement, le moteur électrique 16 et le dispositif de réduction à engrenages 19 sont disposés à l'intérieur du carter 17 de l'actionneur électromécanique 11.

L'arbre de sortie 20 de l'actionneur électromécanique 11 est disposé à l'intérieur du tube d'enroulement 4, et au moins en partie à l'extérieur du carter 17 de l'actionneur électromécanique 11.

L'arbre de sortie 20 de l'actionneur électromécanique 11 est accouplé par un moyen de liaison 38 au tube d'enroulement 4, en particulier un moyen de liaison en forme de roue.

L'actionneur électromécanique 11 comprend également un élément d'obturation 21 d'une extrémité du carter 17.

Ici, le carter 17 de l'actionneur électromécanique 11 est fixé à un support 39, en particulier une joue, du coffre 9 du dispositif d'occultation 3 au moyen de l'élément d'obturation 21 formant un support de couple, en particulier une tête d'obturation et de reprise de couple. Dans un tel cas où l'élément d'obturation 21 forme un support de couple, l'élément d'obturation 21 est également appelé un point fixe de l'actionneur électromécanique 11.

En ce sens, l'actionneur électromécanique 11 est avantageusement, d'une part, monté sur un point fixe et, d'autre part, assemblé au tube d'enroulement 4, de telle sorte à piloter sa mise en rotation autour de l'axe de rotation X du tube d'enroulement 4.

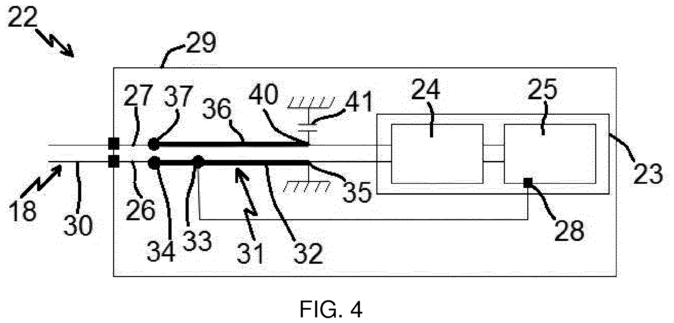

On va décrire à présent, en référence à la figure 4, le dispositif de commande par signaux radiofréquences d'un appareil électrique domestique alimenté en énergie électrique par un réseau d'alimentation électrique. Cet appareil électrique domestique est formé, dans un cas particulier, par l'actionneur électromécanique 11 appartenant à l'installation domotique des figures 1 à 3.

De manière particulière, l'unité électronique de contrôle 15 de l'actionneur électromécanique 11 comprend le dispositif de commande par signaux radiofréquences 22. Le dispositif de commande par signaux radiofréquences 22 est, notamment, logé à l'intérieur du carter 17 de l'actionneur électromécanique 11.

Le dispositif de commande par signaux radiofréquences 22 peut former un module de réception et/ou d'émission d'ordres.

L'élément d'obturation 21 de l'actionneur électromécanique 11 supporte le dispositif de commande par signaux radiofréquences 22.

Le câble d'alimentation électrique 18 de l'actionneur électromécanique 11 comprend au moins deux conducteurs électriques.

Le câble d'alimentation électrique 18 traverse l'élément d'obturation 21 de l'actionneur électromécanique 11 au niveau d'une ouverture de passage, et est connecté électriquement à l'unité électronique de contrôle 15.

Dans un mode de réalisation, le câble d'alimentation électrique 18 est connecté électriquement à l'unité électronique de contrôle 15 par l'emboîtement d'un connecteur électrique du câble d'alimentation électrique 18 sur un connecteur électrique de l'unité électronique de contrôle 15.

Dans un autre mode de réalisation, le câble d'alimentation électrique 18 est connecté électriquement à l'unité électronique de contrôle 15 par l'insertion des conducteurs électriques du câble d'alimentation électrique 18 dans un connecteur électrique de l'unité électronique de contrôle 15.

Pour en revenir au dispositif de commande par signaux radiofréquences 22, ce dernier comprend, au moins, un premier conducteur électrique 26 et un deuxième conducteur électrique 27 d'alimentation en énergie électrique du dispositif de commande par signaux radiofréquences 22.

Le dispositif de commande par signaux radiofréquences 22 comprend une unité radiofréquences 23 d'émission et/ou de réception de signaux radiofréquences.

L'unité radiofréquences 23 comprend un circuit d'alimentation 24 et un circuit radiofréquences 25.

Le circuit d'alimentation 24 de l'unité radiofréquences 23 est alimenté en énergie électrique par le réseau d'alimentation électrique et, en particulier, par les premier et deuxième conducteurs électriques 26, 27 du dispositif de commande par signaux radiofréquences 22 reliés électriquement aux conducteurs électriques du câble d'alimentation électrique 18, lui-même relié au réseau d'alimentation électrique.

Le circuit d'alimentation 24 de l'unité radiofréquences 23 comprend des éléments de transformation de la tension du réseau d'alimentation électrique en une tension interne à l'unité radiofréquences 23.

Ici et de manière nullement limitative, la tension interne à l'unité radiofréquences 23 est de +5V.

La tension interne à l'unité radiofréquences 23 alimente en énergie électrique le circuit radiofréquences 25 de l'unité radiofréquences 23.

L'unité radiofréquences 23 comprend une sortie et/ou une entrée de signaux radiofréquences 28.

Le circuit radiofréquences 25 de l'unité radiofréquences 23 comprend les éléments nécessaires à la réception et/ou l'émission de signaux radiofréquences sur la sortie et/ou l'entrée de signaux radiofréquences 28.

Les premier et deuxième conducteurs électriques 26, 27 du dispositif de commande par signaux radiofréquences 22 sont reliés électriquement au réseau d'alimentation électrique, et, en particulier aux conducteurs électriques du câble d'alimentation électrique 18.

Le dispositif de commande par signaux radiofréquences 22 comprend une carte de circuit imprimé 29.

Les conducteurs électriques du câble d'alimentation électrique 18, correspondant à un conducteur électrique de phase et à un conducteur électrique de neutre, sont reliés électriquement à des pistes de la carte de circuit imprimé 29. Les pistes de la carte de circuit imprimé 29 forment les premier et deuxième conducteurs électriques 26, 27 du dispositif de commande par signaux radiofréquences 22.

Ainsi, le dispositif de commande par signaux radiofréquences 22 est alimenté en énergie électrique par le réseau d'alimentation électrique.

Par ailleurs, le câble d'alimentation électrique 18 peut comprendre un conducteur électrique de protection. Le conducteur électrique de protection du câble d'alimentation électrique 18 est relié à la terre et à une structure métallique de l'actionneur électromécanique 11, telle que le carter 17 de l'actionneur électromécanique 11.

L'unité radiofréquences 23 du dispositif de commande par signaux radiofréquences 22 permet de recevoir des signaux véhiculés par ondes radiofréquences.

Les signaux radiofréquences proviennent d'un émetteur de l'unité de commande locale 12 et/ou de l'unité de commande centrale 13.

Les signaux radiofréquences émis par l'unité de commande locale 12 et/ou de l'unité de commande centrale 13 comportent des ordres de commande de l'actionneur électromécanique 11.

Les ordres de commande reçus par l'unité radiofréquences 23 du dispositif de commande par signaux radiofréquences 22 sont traités par celle-ci et transmis par une connexion électrique depuis l'unité électronique de contrôle 15 au moteur électrique 16, de sorte à commander un entraînement en rotation du tube d'enroulement 4 dans un premier sens de rotation ou dans un deuxième sens de rotation ou encore à arrêter l'entraînement en rotation du tube d'enroulement 4.

Dans un mode de réalisation, l'unité radiofréquences 23 du dispositif de commande par signaux radiofréquences 22 permet également d'émettre des signaux véhiculés par ondes radiofréquences.

Les signaux radiofréquences sont émis en direction d'un récepteur de l'unité de commande locale 12 et/ou de l'unité de commande centrale 13.

Les signaux radiofréquences émis par l'unité radiofréquences 23 du dispositif de commande par signaux radiofréquences 22 comportent, notamment, des informations relatives au fonctionnement de l'actionneur électromécanique 11.

Ainsi, le dispositif de commande par signaux radiofréquences 22 permet de mettre en oeuvre une communication bidirectionnelle, de sorte à échanger des données en émission et en réception avec l'unité de commande locale 12 et/ou avec l'unité de commande centrale 13.

Alternativement selon une réalisation particulière, le dispositif de commande par signaux radiofréquences 22 permet uniquement de mettre en oeuvre une communication monodirectionnelle, de sorte à recevoir des ordres de commande de l'unité de commande locale 12 et/ou de l'unité de commande centrale 13.

Le dispositif de commande par signaux radiofréquences 22 comprend une antenne 30 reliée électriquement à l'unité radiofréquences 23, en particulier par l'intermédiaire d'au moins l'un des conducteurs électriques du réseau d'alimentation électrique. En particulier, l'antenne 30 comporte/est constituée par au moins l'un des conducteurs électriques du réseau d'alimentation électrique. Cette antenne 30 est de longueur indéterminée pour les signaux radiofréquences.

L'antenne 30 du dispositif de commande par signaux radiofréquences 22 permet de capter des signaux radiofréquences émis par l'unité de commande locale 12 et/ou de l'unité de commande centrale 13 et, éventuellement, d'émettre des signaux radiofréquences en direction du récepteur de l'unité de commande locale 12 et/ou de l'unité de commande centrale 13.

Les signaux radiofréquences visés dans le cadre de la présente description sont, préférentiellement, de type hertzien.

Les signaux radiofréquences sont reçus et/ou émis par l'unité radiofréquences 23 du dispositif de commande par signaux radiofréquences 22, et, en particulier, au moyen de l'antenne 30 par une transmission aérienne.

Le dispositif de commande par signaux radiofréquences 22 comprend un coupleur 31. Le rôle de ce coupleur 31 est, notamment, d'adapter l'impédance de sortie et/ou d'entrée de l'unité radiofréquences 22.

En pratique, la carte de circuit imprimé 29 comprend le coupleur 31.

Le coupleur 31 est formé par une ligne de transmission imprimée 32 sur la carte de circuit imprimé 29. En particulier, une première extrémité 34 de la ligne de transmission imprimée 32 est reliée électriquement au premier conducteur électrique 26 de la carte de circuit imprimé 29 et une deuxième extrémité 35 de la ligne de transmission imprimée 32 est reliée électriquement à une tension de référence.

La première ligne de transmission 32 formant le coupleur 31 adapte l'impédance de sortie et/ou d'entrée de l'unité radiofréquences 23 à l'impédance de l'antenne 30. Pour cela, la sortie et/ou l'entrée de signaux radiofréquences 28 est reliée électriquement à un point de connexion 33 du coupleur 31. En particulier, le point de connexion 33 du coupleur 31 constitué par la ligne de transmission imprimée 32 est disposé entre les première et deuxième extrémités 34, 35 de la ligne de transmission imprimée 32.

Préférentiellement, la ligne de transmission imprimée 32 formant le coupleur 31 est une ligne quart d'onde imprimée sur la carte de circuit imprimé 29.

Par la suite, ce qui s'applique à la ligne quart d'onde imprimée, ou à la « première ligne quart d'onde imprimée » de manière préférentielle, s'applique aussi dans le cadre plus général à « la ligne de transmission imprimée 32 formant le coupleur 31 ».

Ainsi, la ligne quart d'onde imprimée 32 sur la carte de circuit imprimé 29 formant le coupleur 31 est une ligne de transmission imprimée appropriée, puisque celle-ci présente une impédance élevée à la première extrémité 34 alors que la deuxième extrémité 35 est reliée électriquement à une tension de référence, autrement dit à la masse.

Une ligne quart d'onde imprimée est un morceau de ligne de transmission dont la longueur est égale au quart de la longueur d'onde électrique du signal transporté. Cette ligne quart d'onde imprimée permet de modifier l'impédance de la charge connectée à son extrémité, en particulier de l'unité radiofréquences 23.

Si la ligne quart d'onde imprimée est ouverte, c'est-à-dire pas reliée électriquement à la charge, elle présente à son entrée un court-circuit, à la fréquence du signal.

Si la ligne quart d'onde imprimée est court-circuitée, elle présente à son entrée une impédance infinie, à la fréquence du signal.

Si la ligne quart d'onde imprimée se termine sur une impédance inférieure à son impédance caractéristique, l'impédance d'entrée est supérieure à celle-ci, et inversement.

De cette manière, la ligne quart d'onde imprimée permet de réaliser un adaptateur d'impédance.

La ligne quart d'onde imprimée 32 est déterminée par une valeur d'impédance caractéristique à la fréquence de travail de l'unité radiofréquences 23.

La ligne quart d'onde imprimée 32 formant le coupleur 31 est dénommée par la suite première ligne quart d'onde imprimée.

Ici, la valeur d'impédance caractéristique de la première ligne quart d'onde imprimée 32 est de 50 Ohms.

La piste de la carte de circuit imprimé 29 formant la première ligne quart d'onde imprimée 32 présente une largeur et une longueur permettant de déterminer la valeur d'impédance.

Les dimensions de la première ligne quart d'onde imprimée 32 sont dépendantes de la fréquence de travail de l'unité radiofréquences 23. Les dimensions de la première ligne quart d'onde imprimée 32 sont également dépendantes du type de substrat constituant la carte de circuit imprimé 29, ainsi que de la permittivité relative par rapport à l'air du substrat constituant la carte de circuit imprimé 29.

Dans un cas où la valeur d'impédance caractéristique de la première ligne quart d'onde imprimée est de 50 Ohms et que la fréquence de travail de l'unité radiofréquences 23 est de 2,4 GHz, la largeur de la première ligne quart d'onde imprimée 32 est de l'ordre de 2,7 millimètres et la longueur de la première ligne quart d'onde imprimée 32 est de l'ordre de 18 millimètres.

Dans un autre cas où la valeur d'impédance caractéristique de la première ligne quart d'onde imprimée est de 50 Ohms et que la fréquence de travail de l'unité radiofréquences 23 est de 868 MHz, la largeur de la première ligne quart d'onde imprimée 32 est de l'ordre de 1 millimètres et la longueur de la première ligne quart d'onde imprimée 32 est de l'ordre de 58 millimètres.

A titre d'exemple nullement limitatif, le substrat de la carte de circuit imprimé 29 est réalisé en époxy et est, en particulier, de type FR4. Et la permittivité relative par rapport à l'air du substrat de la carte de circuit imprimé 29 est de 4,3.

Comme évoqué précédemment, la première extrémité 34 de la première ligne quart d'onde imprimée 32 est reliée électriquement au premier conducteur électrique 26 de la carte de circuit imprimé 29.

Le premier conducteur électrique 26 de la carte de circuit imprimé 29 du dispositif de commande par signaux radiofréquences 22 est relié électriquement à l'un des conducteurs électriques du câble d'alimentation électrique 18.

Le conducteur électrique du câble d'alimentation électrique 18 relié électriquement au premier conducteur électrique 26 de la carte de circuit imprimé 29 du dispositif de commande par signaux radiofréquences 22 peut être un conducteur électrique de phase ou un conducteur électrique de neutre.

La première ligne quart d'onde imprimée 32 est traversée par le courant du réseau d'alimentation électrique circulant dans l'un des conducteurs électriques du réseau d'alimentation électrique, et, en particulier, du câble d'alimentation électrique 18, puis dans le premier conducteur électrique 26 du dispositif de commande par signaux radiofréquences 22 et alimentant l'appareil électrique domestique, en l'occurrence l'actionneur électromécanique 11 et, en particulier, le moteur électrique 16 de l'actionneur électromécanique 11.

Par ailleurs, la deuxième extrémité 35 de la première ligne quart d'onde imprimée 32 est reliée électriquement à une première tension de référence, ou autrement dit à la masse.

La première ligne quart d'onde imprimée 32 est traversée par le courant du réseau d'alimentation électrique alimentant l'appareil électrique domestique 11. Il s'agit d'un courant alternatif basse fréquence, et par exemple de l'ordre de 50Hz, dont l'intensité peut varier en fonction du mode de fonctionnement de l'appareil électrique domestique 11.

La sortie et/ou l'entrée de signaux radiofréquences 28 de l'unité radiofréquences 23 est reliée électriquement au point de connexion 33 du coupleur 31, en l'occurrence de la première ligne quart d'onde imprimée 32.

Ici, la connexion électrique est réalisée entre le point de connexion 33 de la première ligne quart d'onde imprimée 32 et la sortie et/ou l'entrée de signaux radiofréquences 28 de l'unité radiofréquences 23.

Le point de connexion 33 de la première ligne quart d'onde imprimée 32 est disposé entre les première et deuxième extrémités 34, 35 de la première ligne quart d'onde imprimée 32.

La position du point de connexion 33 de la première ligne quart d'onde imprimée 32 est déterminée pour obtenir une valeur d'impédance de 50 Ohms, de sorte à être en adéquation avec la valeur d'impédance de l'unité radiofréquences 23.

La carte de circuit imprimé 29 comprend la piste matérialisant la première ligne quart d'onde imprimée 32 au niveau d'une première couche de celle-ci, et un plan de masse réalisé au niveau d'une couche différente de celle-ci.

La piste de la carte de circuit imprimé 29 formant la première ligne quart d'onde imprimée 32 présente une longueur de l'ordre du quart de la longueur d'onde de la fréquence d'utilisation du dispositif de commande par signaux radiofréquences 22.

Avantageusement, la piste de la carte de circuit imprimé 29 formant la première ligne quart d'onde imprimée 32 s'étend selon une ligne droite.

Dans un mode de réalisation, le premier conducteur électrique 26 du dispositif de commande par signaux radiofréquences 22 relié électriquement avec le coupleur 31, formé par la première ligne quart d'onde imprimée 32 sur la carte de circuit imprimé 29, est réalisé, au moins sur une portion de sa longueur, au moyen d'une piste de la carte de circuit imprimé 29.

Les premier et deuxième conducteurs électriques 26, 27 du dispositif de commande par signaux radiofréquences 22 permettent d'alimenter en énergie électrique la carte de circuit imprimé 29 du dispositif de commande par signaux radiofréquences 22 ainsi que le moteur électrique 16 de l'actionneur électromécanique 11.

Ici, le coupleur 31 et le premier conducteur électrique 26 du dispositif de commande par signaux radiofréquences 22 sont réalisés respectivement au moyen d'une piste de la carte de circuit imprimé 29.

Notamment, les pistes formant respectivement le coupleur 31 et le premier conducteur électrique 26 sont formées dans des plans différents de la carte de circuit imprimée 29.

Les pistes de la carte de circuit imprimé 29 correspondent à des bandes métalliques permettant de créer des liaisons électriques. Ces pistes sont généralement réalisées au niveau d'une surface d'une carte de circuit imprimé 29.

L'implantation du coupleur 31 sur la carte de circuit imprimé 29 du dispositif de commande par signaux radiofréquences 22 au moyen de la première ligne quart d'onde imprimée 32 et la liaison électrique du coupleur 31 à l'un des conducteurs électriques du réseau d'alimentation électrique permet de s'affranchir des problématiques liées à la valeur de courant du réseau d'alimentation électrique circulant dans le coupleur 31 et/ou liées à la valeur de la fréquence de travail de l'unité radiofréquences 23.

En outre, la mise en oeuvre du coupleur 31 avec une prise intermédiaire réalisée par le point de connexion 33 de la première ligne quart d'onde imprimée 32 relié électriquement à la sortie et/ou l'entrée de signaux radiofréquences 28 de l'unité radiofréquences 23 permet d'obtenir une valeur d'impédance caractéristique, de sorte à être en adéquation avec la valeur d'impédance de l'unité radiofréquences 23.

De cette manière, la largeur de la piste de la carte de circuit imprimé 29 formant la première ligne quart d'onde imprimée 32 peut être adaptée en fonction de la valeur de courant du réseau d'alimentation électrique circulant dans le coupleur 31 sans engendrer une perte de place sur la carte de circuit imprimé 29 du dispositif de commande par signaux radiofréquences 22.

La prise intermédiaire réalisée au niveau du coupleur 31 correspond à un point de connexion électrique, de sorte que la première ligne quart d'onde imprimée 32 est partagée en deux parties de part et d'autre de ce point de connexion électrique.

Le coupleur 31 réalisé au moyen de la première ligne quart d'onde imprimée 32 sur la carte de circuit imprimé 29 permet de pouvoir faire fonctionner le dispositif de commande par signaux radiofréquences 22 dans une bande de radiofréquences élevée, pouvant être par exemple de l'ordre de 2,4GHz.

Dans un tel cas où la fréquence de travail du dispositif de commande par signaux radiofréquences 22 est de l'ordre de 2,4GHz, la longueur du coupleur 31 réalisé au moyen de la première ligne quart d'onde imprimée 32 sur la carte de circuit imprimé 29 est de l'ordre de 18 millimètres.

Bien entendu, le dispositif de commande par signaux radiofréquences 22 peut également fonctionner dans une autre bande de radiofréquences, pouvant s'étendre, notamment, entre 400 MHz et 4 GHz, et pouvant prendre, notamment, des valeurs de l'ordre de 433MHz ou 868MHz.

Le coupleur 31 réalisé au moyen de la première ligne quart d'onde imprimée 32 sur la carte de circuit imprimé 29 permet de pouvoir alimenter en énergie électrique l'appareil électrique domestique 11 avec un fort courant, pouvant être par exemple de l'ordre de 10A.

L'unité radiofréquences 23 est alimentée en énergie électrique par le réseau d'alimentation électrique au moyen des premier et deuxième conducteurs électriques 26, 27 du dispositif de commande par signaux radiofréquences 22, où ces premier et deuxième conducteurs électriques 26, 27 sont respectivement réalisés au moyen d'une piste de la carte de circuit imprimé 29 du dispositif de commande par signaux radiofréquences 22 et connectés électriquement à un conducteur électrique du réseau d'alimentation électrique.

Préférentiellement, la première ligne quart d'onde imprimée 32 s'étend, au moins partiellement, suivant une direction parallèle, voire identique, au premier conducteur électrique 26 du dispositif de commande par signaux radiofréquences 22.

Ainsi, l'encombrement de la première ligne quart d'onde imprimée 32 sur la carte de circuit imprimé 29 est minimisé, puisque le trajet de la piste constituant la première ligne quart d'onde imprimée 32 est identique à au moins une portion de la piste constituant le premier conducteur électrique 26 du dispositif de commande par signaux radiofréquences 22.

En pratique, dans une configuration de fonctionnement du dispositif de commande par signaux radiofréquences 22, la première ligne quart d'onde imprimée 32 est traversée par le courant du réseau d'alimentation électrique circulant dans l'un des conducteurs électriques du réseau d'alimentation électrique puis dans le premier conducteur électrique 26 du dispositif de commande par signaux radiofréquences 22 et alimentant l'appareil électrique domestique 11.

Dans un mode de réalisation non représenté, où la valeur de courant du réseau d'alimentation électrique circulant dans la première ligne de transmission imprimée 32, réalisée en l'occurrence par la première ligne quart d'onde, est élevée, par exemple de l'ordre de 10A, un conducteur électrique auxiliaire est connecté électriquement à la première ligne de transmission imprimée 32.

Ainsi, le conducteur électrique auxiliaire connecté électriquement à la première ligne de transmission imprimée 32 permet de faire circuler le courant du réseau d'alimentation électrique au travers de celui-ci en parallèle de la première ligne de transmission imprimée 32, de sorte à minimiser la largeur de la piste de la carte de circuit imprimé 29 constituant la première ligne de transmission imprimée 32.

Le conducteur électrique auxiliaire connecté électriquement à la première ligne de transmission imprimée 32 se présente sous la forme d'un fil.

Le conducteur électrique auxiliaire est connecté électriquement entre les première et deuxième extrémités 34, 35 de la première ligne de transmission imprimée 32.

La connexion électrique du conducteur électrique auxiliaire au niveau des première et deuxième extrémités 34, 35 de la première ligne de transmission imprimée 32 peut être réalisée par soudage.

Le conducteur électrique auxiliaire connecté électriquement à la première ligne de transmission imprimée 32 s'étend parallèlement à celle-ci.

Préférentiellement, le dispositif de commande par signaux radiofréquences 22 comprend une autre ligne de transmission imprimée 36 sur la carte de circuit imprimé 29.

Avantageusement, l'autre ligne de transmission imprimée 36 est une ligne quart d'onde imprimée.

L'autre ligne quart d'onde imprimée 36 est dénommée par la suite deuxième ligne quart d'onde imprimée.

Ce qui s'applique à cette deuxième ligne quart d'onde imprimée peut s'appliquer plus généralement à « ladite autre ligne de transmission imprimée 36 ».

Une première extrémité 37 de la deuxième ligne quart d'onde imprimée 36 est reliée électriquement au deuxième conducteur électrique 27 du dispositif de commande par signaux radiofréquences 22. Et une deuxième extrémité 40 de la deuxième ligne quart d'onde imprimée 36 est reliée électriquement à une deuxième tension de référence, ou autrement dit à la masse.

Ainsi, la deuxième ligne quart d'onde imprimée 36 permet d'isoler le deuxième conducteur électrique 27 du dispositif de commande par signaux radiofréquences 22 d'un point de vue radiofréquence, de sorte à ne pas perturber le fonctionnement de l'antenne 30 réalisée au moyen d'au moins l'un des conducteurs électriques du réseau d'alimentation électrique.

La deuxième extrémité 35 de la première ligne quart d'onde imprimée 32 et la deuxième extrémité 40 de la deuxième ligne quart d'onde imprimée 36 peuvent être reliées électriquement à une même tension de référence. Dans un tel cas, les première et deuxième tensions de référence peuvent être obtenues par un même plan de masse de la carte de circuit imprimé 29.

Avantageusement, le dispositif de commande par signaux radiofréquences 22 comporte un condensateur 41 reliant électriquement la deuxième extrémité 40 de la deuxième ligne quart d'onde imprimée 36 à la deuxième tension de référence. Comme l'illustre la figure 4, le condensateur 41 relie en série la deuxième extrémité 40 de la deuxième ligne quart d'onde imprimée 36 à la deuxième tension de référence.

Ainsi, le condensateur 41 permet de relier électriquement la deuxième ligne quart d'onde imprimée 36 à la deuxième tension de référence, autrement dit à la masse, d'un point de vue radiofréquence.

Préférentiellement, la deuxième ligne quart d'onde imprimée 36 s'étend au moins partiellement suivant une direction parallèle, voire identique, au deuxième conducteur électrique 27 du dispositif de commande par signaux radiofréquences 22.

Ainsi, l'encombrement de la deuxième ligne quart d'onde imprimée 36 sur la carte de circuit imprimé 29 est minimisé, puisque le trajet de la piste constituant la deuxième ligne quart d'onde imprimée 36 est identique sur au moins une portion de la piste constituant le deuxième conducteur électrique 27 du dispositif de commande par signaux radiofréquences 22.

En pratique, dans la configuration de fonctionnement du dispositif de commande par signaux radiofréquences 22, la deuxième ligne quart d'onde imprimée 36 est traversée par le courant du réseau d'alimentation électrique circulant dans l'un des conducteurs électriques du réseau d'alimentation électrique puis dans le deuxième conducteur électrique 27 du dispositif de commande par signaux radiofréquences 22 et alimentant l'appareil électrique domestique 11.

Avantageusement, les première et deuxième lignes de transmission imprimées 32, 36 du dispositif de commande par signaux radiofréquences 22 sont des lignes quart d'onde imprimées.

En outre, les première et deuxième lignes quart d'onde imprimées 32, 36 peuvent être réalisées par des pistes de dimensions identiques sur la carte de circuit imprimé 29 et/ou être parallèles.

Notamment, les pistes de la carte de circuit imprimé 29 constituant les premier et deuxième conducteurs électriques 26, 27 sont reliées respectivement aux première et deuxième lignes quart d'onde 32, 36. Ces première et deuxième lignes quart d'onde 32, 36 sont traversées par le courant du réseau d'alimentation électrique. Les pistes de la carte de circuit imprimé 29 constituant les premier et deuxième conducteurs électriques 26, 27 sont distinctes des pistes constituant les première et deuxième lignes quart d'onde 32, 36.

Avantageusement, la piste de la carte de circuit imprimé 29 formant la deuxième ligne quart d'onde imprimée 36 s'étend selon une ligne droite.

Il est clair de ce qui a été décrit précédemment, qu'un appareil électrique domestique peut comprendre un dispositif de commande tel que décrit et, notamment, former un actionneur électromécanique pour une installation domotique de fermeture ou de protection solaire.

Une installation comprenant plusieurs appareils électriques domestiques 11 tels que décrits précédemment et, éventuellement, plusieurs unités de commande 12, 13, pouvant être locales ou centrales, peuvent être configurés pour communiquer ensemble sur un même réseau radiofréquences en utilisant un protocole commun et des moyens d'identification.

Grâce à la présente invention, l'implantation du coupleur sur la carte de circuit imprimé du dispositif de commande par signaux radiofréquences au moyen d'une ligne de transmission imprimée et la liaison électrique du coupleur à l'un des conducteurs électriques du réseau d'alimentation électrique permet de s'affranchir des problématiques liées à la valeur de courant du réseau d'alimentation électrique circulant dans le coupleur et/ou à la valeur de la fréquence de travail de l'unité radiofréquences.

Bien entendu, de nombreuses modifications peuvent être apportées aux exemples de réalisation décrits précédemment sans sortir du cadre de l'invention.

En particulier, le câble d'alimentation électrique peut comprendre trois conducteurs électriques, et, notamment deux phases et un neutre. Dans un tel cas, les trois conducteurs électriques du câble d'alimentation électrique sont reliés électriquement à trois pistes de la carte de circuit imprimé du dispositif de commande par signaux radiofréquences.

En outre, dans un autre mode de réalisation, l'appareil électrique domestique comprenant le dispositif de commande par signaux radiofréquences peut être un dispositif d'éclairage, un dispositif de chauffage, notamment un dispositif de chauffage de terrasse à infrarouge, et/ou ventilation ou un dispositif d'alarme équipant un bâtiment ou son environnement extérieur, tel que le jardin.

L'appareil électrique domestique comprenant le dispositif de commande par signaux radiofréquences peut également être un capteur de détection d'un paramètre météorologique, tel que le soleil, le vent ou l'humidité, un capteur de présence ou un capteur d'alarme.

En outre, les modes de réalisation et variantes envisagés peuvent être combinés pour générer de nouveaux modes de réalisation de l'invention.

Enfin, une installation domotique de fermeture ou de protection solaire peut comprendre un appareil électrique domestique 11 tel que décrit et un écran 2 enroulable sur un tube d'enroulement 4 entraîné en rotation par l'actionneur électromécanique 11 formant l'appareil électrique domestique.

## Revendications

1. Dispositif de commande par signaux radiofréquences (22) d'un appareil électrique domestique (11) alimenté en énergie électrique par un réseau d'alimentation électrique, le dispositif (22) comprenant :
- un premier conducteur électrique (26) et un deuxième conducteur électrique (27) d'alimentation en énergie électrique du dispositif de commande (22),
- un coupleur (31),
- une unité radiofréquences (23) d'émission et/ou de réception de signaux radiofréquences comprenant une sortie et/ou une entrée de signaux radiofréquences (28) reliée électriquement à un point de connexion (33) du coupleur (31), de telle sorte que le coupleur (31) adapte l'impédance de sortie et/ou d'entrée de l'unité radiofréquences (23),
- une carte de circuit imprimé (29) comprenant le coupleur (31),
**caractérisé en ce que** le coupleur (31) est formé par une ligne de transmission imprimée (32) sur la carte de circuit imprimé (29), une première extrémité (34) de la ligne de transmission imprimée (32) étant reliée électriquement au premier conducteur électrique (26) du dispositif de commande (22), et une deuxième extrémité (35) de la ligne de transmission imprimée (32) étant reliée électriquement à une première tension de référence,
**en ce que** le point de connexion (33) du coupleur (31) constitué par la ligne de transmission imprimée (32) est disposé entre les première et deuxième extrémités (34, 35) de la ligne de transmission imprimée (32), et
**en ce que** le dispositif de commande (22) comprend une antenne (30) reliée électriquement à l'unité radiofréquences par l'intermédiaire d'au moins l'un des conducteurs électriques du réseau d'alimentation électrique, le premier conducteur électrique (26) du dispositif de commande (22) étant relié au réseau d'alimentation électrique, et le coupleur (31) adaptant l'impédance de sortie et/ou d'entrée de l'unité radiofréquences (23) à l'impédance de l'antenne (30).

2. Dispositif de commande par signaux radiofréquences (22) selon la revendication 1, **caractérisé en ce que** la ligne de transmission imprimée (32) formant le coupleur (31) est une ligne quart d'onde imprimée sur la carte de circuit imprimé (29).

3. Dispositif de commande par signaux radiofréquences (22) selon la revendication 1 ou la revendication 2, **caractérisé en ce que** la ligne de transmission imprimée (32) s'étend au moins partiellement suivant une direction parallèle au premier conducteur électrique (26) du dispositif de commande (22).

4. Dispositif de commande par signaux radiofréquences (22) selon l'une quelconque des revendications 1 à 3, **caractérisé en ce que** dans une configuration de fonctionnement du dispositif de commande (22), la ligne de transmission imprimée (32) est traversée par le courant du réseau d'alimentation électrique circulant dans l'un des conducteurs électriques du réseau d'alimentation électrique puis dans le premier conducteur électrique (26) du dispositif de commande (22) et alimentant l'appareil électrique domestique (11).

5. Dispositif de commande par signaux radiofréquences (22) selon l'une quelconque des revendications 1 à 4, **caractérisé en ce que** le dispositif de commande (22) comprend une autre ligne de transmission imprimée (36) sur la carte de circuit imprimé (29), une première extrémité (37) de l'autre ligne de transmission imprimée (36) étant reliée électriquement au deuxième conducteur électrique (27) du dispositif de commande (22), et une deuxième extrémité (40) de l'autre ligne de transmission imprimée (36) étant reliée électriquement à une deuxième tension de référence.

6. Dispositif de commande par signaux radiofréquences (22) selon la revendication 5, **caractérisé en ce que** le dispositif de commande (22) comporte un condensateur (41) reliant électriquement la deuxième extrémité (40) de l'autre ligne de transmission imprimée (36) à la deuxième tension de référence.

7. Dispositif de commande par signaux radiofréquences (22) selon la revendication 5 ou la revendication 6, **caractérisé en ce que** l'autre ligne de transmission imprimée (36) s'étend, au moins partiellement, suivant une direction parallèle au deuxième conducteur électrique (27) du dispositif de commande (22).

8. Appareil électrique domestique (11), **caractérisé en ce qu'**il comprend un dispositif de commande par signaux radiofréquences conforme à l'une quelconque des revendications 1 à 7.

9. Appareil électrique domestique (11) selon la revendication 8, **caractérisé en ce que** l'appareil électrique domestique est un actionneur électromécanique (11) pour une installation domotique de fermeture ou de protection solaire.

10. Installation domotique de fermeture ou de protection solaire comprenant un appareil électrique domestique (11) selon la revendication 9 et un écran (2) enroulable sur un tube d'enroulement (4) entraîné en rotation par l'actionneur électromécanique (11) formant l'appareil électrique domestique.

## Patentansprüche

1. Vorrichtung (22) zur Steuerung eines elektrischen Haushaltsgeräts (11) über Hochfrequenzsignale, die über ein Stromversorgungsnetz mit elektrischer Energie versorgt wird, wobei die Vorrichtung (22) enthält:
- einen ersten elektrischen Leiter (26) und einen zweiten elektrischen Leiter (27) zur Versorgung der Steuervorrichtung (22) mit elektrischer Energie,
- einen Koppler (31),
- eine Hochfrequenzeinheit (23) zum Senden und/oder Empfangen von Hochfrequenzsignalen, die einen Ausgang und/oder einen Eingang von Hochfrequenzsignalen (28) enthält, der elektrisch mit einem Verbindungspunkt (33) des Kopplers (31) verbunden ist, so dass der Koppler (31) die Ausgangs- und/oder Eingangsimpedanz der Hochfrequenzeinheit (23) anpasst,
- eine den Koppler (31) enthaltende Druckschaltungsplatte (29),
**dadurch gekennzeichnet, dass** der Koppler (31) von einer gedruckten Übertragungsleitung (32) auf der Druckschaltungsplatte (29) gebildet wird, wobei ein erstes Ende (34) der gedruckten Übertragungsleitung (32) elektrisch mit dem ersten elektrischen Leiter (26) der Steuervorrichtung (22) verbunden ist, und ein zweites Ende (35) der gedruckten Übertragungsleitung (32) elektrisch mit einer ersten Bezugsspannung verbunden ist,
dass der Verbindungspunkt (33) des von der gedruckten Übertragungsleitung (32) gebildeten Kopplers (31) zwischen dem ersten und dem zweiten Ende (34, 35) der gedruckten Übertragungsleitung (32) angeordnet ist, und
dass die Steuervorrichtung (22) eine Antenne (30) enthält, die über mindestens einen der elektrischen Leiter des Stromversorgungsnetzes elektrisch mit der Hochfrequenzeinheit verbunden ist, wobei der erste elektrische Leiter (26) der Steuervorrichtung (22) mit dem Stromversorgungsnetz verbunden ist, und der Koppler (31) die Ausgangs- und/oder Eingangsimpedanz der Hochfrequenzeinheit (23) an die Impedanz der Antenne (30) anpasst.

2. Vorrichtung zur Steuerung über Hochfrequenzsignale (22) nach Anspruch 1, **dadurch gekennzeichnet, dass** die den Koppler (31) bildende gedruckte Übertragungsleitung (32) eine auf die Druckschaltungsplatte (29) gedruckte Viertelwellenleitung ist.

3. Vorrichtung zur Steuerung über Hochfrequenzsignale (22) nach Anspruch 1 oder Anspruch 2, **dadurch gekennzeichnet, dass** die gedruckte Übertragungsleitung (32) sich mindestens teilweise gemäß einer Richtung parallel zum ersten elektrischen Leiter (26) der Steuervorrichtung (22) erstreckt.

4. Vorrichtung zur Steuerung über Hochfrequenzsignale (22) nach einem der Ansprüche 1 bis 3, **dadurch gekennzeichnet, dass** in einer Betriebskonfiguration der Steuervorrichtung (22) die gedruckte Übertragungsleitung (32) vom Strom des Stromversorgungsnetzes durchquert wird, der in einem der elektrischen Leiter des Stromversorgungsnetzes und dann im ersten elektrischen Leiter (26) der Steuervorrichtung (22) fließt und das elektrische Haushaltsgerät (11) versorgt.

5. Vorrichtung zur Steuerung über Hochfrequenzsignale (22) nach einem der Ansprüche 1 bis 4, **dadurch gekennzeichnet, dass** die Steuervorrichtung (22) eine andere gedruckte Übertragungsleitung (36) auf der Druckschaltungsplatte (29) enthält, wobei ein erstes Ende (37) der anderen gedruckten Übertragungsleitung (36) elektrisch mit dem zweiten elektrischen Leiter (27) der Steuervorrichtung (22) verbunden ist, und ein zweites Ende (40) der anderen gedruckten Übertragungsleitung (36) elektrisch mit einer zweiten Bezugsspannung verbunden ist.

6. Vorrichtung zur Steuerung über Hochfrequenzsignale (22) nach Anspruch 5, **dadurch gekennzeichnet, dass** die Steuervorrichtung (22) einen Kondensator (41) aufweist, der das zweite Ende (40) der anderen gedruckten Übertragungsleitung (36) elektrisch mit der zweiten Bezugsspannung verbindet.

7. Vorrichtung zur Steuerung über Hochfrequenzsignale (22) nach Anspruch 5 oder Anspruch 6, **dadurch gekennzeichnet, dass** die andere gedruckte Übertragungsleitung (36) sich zumindest teilweise gemäß einer Richtung parallel zum zweiten elektrischen Leiter (27) der Steuervorrichtung (22) erstreckt.

8. Elektrisches Haushaltsgerät (11), **dadurch gekennzeichnet, dass** es eine Vorrichtung zur Steuerung über Hochfrequenzsignale nach einem der Ansprüche 1 bis 7 enthält.

9. Elektrisches Haushaltsgerät (11) nach Anspruch 8, **dadurch gekennzeichnet, dass** das elektrische Haushaltsgerät ein elektromechanisches Stellglied (11) für eine haustechnische Schließ- oder Sonnenschutzanlage ist.

10. Haustechnische Schließ- oder Sonnenschutzanlage, die ein elektrisches Haushaltsgerät (11) nach Anspruch 9 und eine Abdeckung (2) enthält, die auf ein Aufwickelrohr (4) aufgewickelt werden kann, das vom das elektrisches Haushaltsgerät (11) bildenden elektromechanischen Stellglied angetrieben wird.

## Claims

1. A control device by radiofrequency signals (22) of a home electrical appliance (11) electrically powered by an electrical power supply network, the device (22) including:
- a first electrical conductor (26) and a second electrical conductor (27) for electrically powering the control device (22),
- a coupler (31),
- a radiofrequency unit (23) for transmitting and/or receiving radiofrequency signals including an output and/or an input for radiofrequency signals (28) electrically connected to a connection point (33) of the coupler (31), so that the coupler (31) matches the output and/or input impedance of the radiofrequency unit (23),
- a printed circuit board (29) including the coupler (31),
**characterized in that** the coupler (31) is formed by a printed transmission line (32) on the printed circuit board (29), a first end (34) of the printed transmission line (32) being electrically connected to the first electrical conductor (26) of the control device (22), and a second end (35) of the printed transmission line (32) being electrically connected to a first reference voltage,
**in that** the connection point (33) of the coupler (31) consisting of the printed transmission line (32) is arranged between the first and second ends (34, 35) of the printed transmission line (32), and
**in that** the control device (22) includes an antenna (30) electrically connected to the radiofrequency unit via at least one of the electrical conductors of the electrical power supply network, the first electrical conductor (26) of the control device (22) being connected to electrical power supply network, and the coupler (31) matching the output and/or input impedance of the radiofrequency unit (23) to the impedance of the antenna (30).

2. The control device by radiofrequency signals (22) as claimed in claim 1, **characterized in that** the printed transmission line (32) forming the coupler (31) is a printed quarter-wave line on the printed circuit board (29).

3. The control device by radiofrequency signals (22) as claimed in claim 1 or claim 2, **characterized in that** the printed transmission line (32) extends at least partially along a direction parallel to the first electrical conductor (26) of the control device (22).

4. The control device by radiofrequency signals (22) as claimed in any one of claims 1 through 3, **characterized in that** in an operating configuration of the control device (22), the printed transmission line (32) is traversed by the electrical power supply network current flowing in one of the electrical conductors of the electrical power supply network then in the first electrical conductor (26) of the control device (22) and powering the home electrical appliance (11).

5. The control device by radiofrequency signals (22) as claimed in any one of claims 1 through 4, **characterized in that** the control device (22) includes another printed transmission line (36) on the printed circuit board (29), a first end (37) of the other printed transmission line (36) being electrically connected to the second electrical conductor (27) of the control device (22), and a second end (40) of the other printed transmission line (36) being electrically connected to a second reference voltage.

6. The control device by radiofrequency signals (22) as claimed in claim 5, **characterized in that** the control device (22) comprises a capacitor (41) electrically connecting the second end (40) of the other printed transmission line (36) to the second reference voltage.

7. The control device by radiofrequency signals (22) as claimed in claim 5 or claim 6, **characterized in that** the other printed transmission line (36) extends, at least partially, along a direction parallel to the second electrical conductor (27) of the control device (22).

8. A home electrical appliance (11), **characterized in that** it includes a control device by radiofrequency signals in conformity with any one of claims 1 through 7.

9. The home electrical appliance (11) as claimed in claim 8, **characterized in that** the home electrical appliance is an electromechanical actuator (11) for a home automation closure or solar protection installation.

10. A home automation closure or solar protection installation including a home electrical appliance (11) as claimed in claim 9 and a rollable screen (2) on a roller tube (4) rotated by the electromechanical actuator (11) forming the home electrical appliance.
